# EUROPEAN PATENT SPECIFICATION

(11) **EP 3 044 370 B1**
(45) Date of publication and mention of the grant of the patent: **02.02.2022**
(21) Application number: 14843332.9
(22) Date of filing: 10.09.2014
(51) Int. Cl.: D21H 27/38, B32B 29/00, D21H 21/18, D21H 27/10, B65D 65/40, D21H 11/00, D21H 17/24

(54) **MULTIPLY PAPERBOARD**
MEHRLAGIGE PAPPE
CARTON MULTICOUCHE

(30) Priority: 13.09.2013 SE 1300602
(43) Date of publication of application: 20.07.2016
(73) Proprietor: Stora Enso Oyj, 00101 Helsinki (FI)
(72) Inventor: HALLGREN, Hans, S-16854 Bromma (SE); PENG, Frank, S-66341 Hammarö (SE)
(74) Representative: Steinrud, Henrik
(86) International application number: PCT/IB2014/064389
(87) International publication number: WO 2015/036932

(56) References cited:
- WO-A1-00/14333
- WO-A1-99/02777
- WO-A1-2006/084883
- WO-A1-2006/084883
- WO-A1-2008/031921
- WO-A1-2010/114467
- CN-A- 102 926 293
- US-A- 5 169 496
- US-A1- 2003 111 198
- US-A1- 2003 168 191
- US-A1- 2006 065 379
- US-A1- 2007 137 815
- US-A1- 2013 180 680
- FISEROVA, M.: 'Relationship between fibre characteristics and tensile strength of hardwood and softwood kraft pulps' CELLUL. CHEM. TECHNOL. vol. 44, no. 7-8, 2010, pages 249 - 253, XP055326672

## Description

A multi-ply paperboard comprising chemical and mechanical pulp of cellulosic fibers.

### Technical field

There are a large number of applications for the use of paperboard. All these applications have their own specific requirements on the paperboard, thus the properties of the paperboard must differ depending on the intended end use.

Paperboard which is to be converted (e.g. coated, printed, cut, creased and folded) on fast running automatic machines must have the required strength to withstand the strain and stress created during the converting. The Paperboard must also have a high bending resistance in order to achieve good runnability during converting. Also properties such as flatness and dimensional stability are important during converting.

Paperboard used in packaging applications, e.g. for packaging of liquids or dry food has to protect the contents from the surrounding environments. The package must further protect the content against impacts during handling, transportation and storing, against the pressure of stacking and extreme temperatures and moisture. Thus, paperboard used for packaging applications must fulfil general strength requirements, e.g. high bending resistance ply bond and high tear and tensile strength. For long shelf-life products the package must also have good barrier properties against light, oxygen and moisture. Also the demand on print quality of premium consumer goods packages can be as high as that of luxury magazines.

The highest quality paperboard available is made entirely of chemical pulp, e.g. SBS (solid bleached sulphate). Such paperboard has a very good appearance however needs to have a high grammage in order to give required bending resistance. This kind of solid paperboard is commonly used for packaging of e.g. cigarettes or bottle of liquors. However, packages made from this kind of paperboard are less cost-efficient due to the higher material costs. Not all applications need this extraordinary quality, and thus other paperboard types with different qualities have been developed.

A paperboard generally comprises 1-5 plies (layers). A paperboard that is to be converted usually comprises more than one ply. A multi-ply paperboard usually shows higher bending resistance index than a single-ply paperboard. A paperboard which consists of three or more plies comprises top and back plies and one or more middle plies.

Chemical pulp is often times used in the top and back plies of the board to provide the board with strength and good printing properties. In the art, the top and back plies usually comprise a large amount of softwood fibers, since this is believed to contribute to an increased strength and bending resistance. Fibers from softwood are longer than fibers from hard wood and thus, provide better internal bonding that the shorter fibers of hardwood.

The middle ply of the board may contain both mechanical pulp and/or chemical pulp. Mechanical pulp, such as CTMP, is a desirable raw material since it has low comparatively density and can be produced to a lower cost than chemical pulp. Also, mechanical pulp has a higher yield and thus a higher efficiency of raw material usage. In high quality boards, softwood CTMP is the most common mechanical pulp used for the middle ply because softwood CTMP, in addition to high bulk, also has long fibers that can provide good internal bonding. Chemical pulp is normally also used in the middle ply in combination with mechanical pulp, as reinforcement, due to its high strength properties.

A typical paperboard used for packaging of liquids or dry food comprises top and back plies of bleached sulphate pulp made from softwood fibers and a middle layer comprising a mixture of bleached sulphate pulp and CTMP from softwood fibers.

Because of its ability to combine high bulk and high internal bonding, softwood pulp is a major raw material in the production of high quality paperboard. Unfortunately, high quality softwood is available only in a limited part of the world and the softwood pulp supply available for the production of paperboard is not sufficient in relation to the need of high quality paperboard worldwide. In the art, attempts to increase the amount of hardwood in the paperboard have been done.

Patent specification WO2006084883 discloses a high quality paperboard with a middle ply comprising a high amount of hardwood CTMP. However, preferably the middle ply also comprises a small amount of softwood pulp and, moreover, the outer plies comprises softwood pulp.

US20070137815A1 discloses a low density, multiply paperboard, wherein at least one of the plies contains both regular chemical bleached, semi-bleached or unbleached pulp fibers and bulky fibers.

Patent specification US2005257909 relates to a board comprising substances which reduces undesirable smell. One example mentions use of a furnish comprising 70% bleached hardwood pulp to produce the plies.

However, the prevailing assumption of today is that a certain amount of bleached softwood pulp is needed in the back ply of paperboard products, such as paperboard products for use in liquid packaging or food packaging, to achieve an acceptable internal strength and bending resistance.

### Summary of the invention

The present invention discloses a multi-ply paperboard for packaging of liquid and/or food products, which paperboard comprises a top ply, a back ply and at least one middle ply arranged between said top and back ply. The invention is characterized in that the paperboard is made of 100% of hardwood pulp, calculated on the total fiber weight of said paperboard, said top ply is made of hardwood chemical pulp and said back ply is made of unbleached hardwood chemical pulp to 100% by weight, calculated on the total fiber weight of said back ply. The paperboard exhibits a Scott bond value of at least 100 J/m² and a bending resistance of at least 5 Nm⁶/kg³.

It has surprisingly been found that the use of unbleached chemical pulp in the back ply makes it possible to use 100% hardwood fibers in the back ply, calculated on the total fiber weight of the back ply, and still achieve a high quality board with an acceptable strength and bending resistance. It has been shown that the tensile stiffness of unbleached hardwood pulp is significantly higher than the tensile stiffness of bleached hardwood pulp. Thus, the tensile stiffness of unbleached hardwood pulp is approximately the same as bleached softwood pulp.

The use of a large amount of hardwood pulp is economically favourable, since the access to softwood pulp is limited in large parts of the world. Moreover, a high amount of hardwood pulp in the paperboard improves the surface properties and the optical properties of the board.

It has been shown that the use of unbleached hardwood pulp in the back ply significantly improves the optical barrier properties (lower transmittance). This reduces the need for barrier coatings, such as aluminium films and, consequently, the environmental carbon footprint can be lowered. At basis weights of below 200 gsm, the paperboard according to the invention may exhibit a transmittance of below 5%, preferably of below 4% and even more preferably of below 3%.

The paperboard according to the invention further exhibits; a Scott Bond value of at least 100 J/m² and a bending resistance index of at least 5 Nm⁶/kg³. Thus, the strength properties of the paperboard are comparable to those of a conventional paperboard, partly comprising bleached softwood fibers in the back ply.

The hardwood pulp in the back ply is chemical pulp, most preferably kraft pulp, which contributes to an improved strength and brightness of the board.

The use of unbleached hardwood pulp in the back ply makes it possible to increase the amount of hardwood fibers in the paper board. The paperboard of the invention comprises 100% by weight of hardwood pulp, all percentages calculated on the total fiber weight of said paperboard.

At least one of the plies, preferably the middle ply, of the inventive paperboard may comprise dry strength additives, such as starch and/or carboxymethyl cellulose (CMC) and/or nanofibrillated or microfibrillated polysaccharide. This enhances the strength properties of the paperboard and enables the use of hardwood fibers to 100%. In one preferred embodiment, at least one ply comprises at least one cationic polymer, such as cationic starch, and at least one anionic polymer, such as anionic CMC. Said cationic and anionic polymers may be added to the furnish forming said ply in consecutive steps. This improves the strength of the resulting board product even further.

### Detailed description of the invention

The paperboard of the current invention is a high quality paperboard suitable for use as liquid packaging paperboard or food service board.

A high quality paperboard is a paperboard with high strength, in order to be able to withstand converting, good protective properties as well as high appearance.

The paperboard of the invention may comprise chemical, e.g. kraft pulp, and/or mechanical pulp, e.g. Groundwood, CTMP (chemithermomechanical pulp) or TMP (thermomechanical pulp). The hardwood pulp used in accordance with the invention can, e.g., be eucalyptus, aspen and birch. Preferably, the hardwood pulp is eucalyptus, since eucalyptus is especially suitable as eco-friendly plantation wood and widely available in regions where softwood fiber resources are scares.

The multi-ply paperboard of the invention comprises three plies; a top ply, a back ply and at least one middle ply. The paperboard may comprise further plies, arranged between said outer plies and said middle ply. These intermediate plies may have the same or different fiber composition as the middle ply. The paperboard may for example comprise four or five plies in total.

The top ply is made of hardwood, chemical pulp, which gives the product good strength and printing properties. The middle ply preferably comprises a large amount of hardwood CTMP, which provides the paperboard with high bulk without any substantial decrease in strength of the final paperboard product. In accordance with the invention, the back ply is made of unbleached hardwood chemical pulp. This has been shown to give increased strength and enhanced optical barrier properties, the paperboard may exhibit a Transmittance of below 5%, or below 4% or even below 3%. In one mode, the paperboard is a three-ply paperboard wherein the top ply comprises hardwood chemical pulp to 100%, the back ply comprises unbleached hardwood chemical pulp to 100% and the middle ply comprises 80% hardwood CTMP and 20 % hardwood kraft pulp.

Surprisingly it has been shown that it is possible to produce a paperboard with a back ply made of 100% unbleached hardwood pulp, which paperboard exhibits a Scott Bond value of at least 100 J/m², or at least 150 J/m² or even of at least 200 J/m², and a bending resistance index of at least 5 Nm⁶/kg³ or even of at least 10 Nm⁶/kg³. The paperboard of the invention may further exhibit a Z-strength of at least 200 kPa or even at least 300kPa or at least 400kPa,

The inventive paperboard may also comprise dry strength additives. The dry strength additives that may be used include, but are not limited to; starch, polyacrylamide, carboxymethyl cellulose (CMC) and/or nanofibrillated polysaccharide. Nanofibrillated polysaccharide shall in this context include bacterial cellulose or nanocellulose spun with either traditional spinning techniques or with electrostatic spinning. Also microfibrillated cellulose (MFC), also known as nanocellulose, cellulose whiskers, microcrystalline cellulose (MCC), nanocrystalline cellulose (NCC) or regenerated cellulose fibers and particles are herein included in the definition of nanofibrillated polyschharide.

In one embodiment, one of the plies, preferably the middle ply, comprises cationic starch and anionic CMC. Cationic starch and anionic CMC may be added to one of the plies, preferably the middle ply, in consecutive step. This may e.g. be accomplished in accordance with the methods disclosed in WO2006120235 or WO2006041401. This has been shown to increase the strength properties of the resultant paperboard product even further. Preferably, the middle ply comprises cationic starch to an amount of at least 10 kg/ton, or preferably at least 15 kg/ton, and CMC to an amount of at least 0,5 kg/ton or 0,8 kg/ton.

### Measurement and evaluation methods

The following methods and standards apply both to the definitions of the appended claims and to the measurements performed in the example below.
Tensile Index: ISO 1924-3:2005
Tear index: ISO 1974:1990
SCT Index: ISO 9895:2008
Scott Bond: TAPPI UM-403
Z-strength: SCAN-P 80:98
Bending resistance Index: ISO 2493-1:2010 Constant rate of deflection. The bending resistance index (GM) presented in the appended claims and in the measurements performed in the example below refers to the geometric mean value (GM) of the bending resistance index in the machine direction and the bending resistance index cross the machine direction. Formation Index: measured according to AMBERTEC Beta Formation Tester
Roughness Bendtsen: SCAN-P84:02
Air resistance Gurley L&W: SCAN P26:78
Density (paperboards, sample 1 - 2, table 2): ISO 534:2011 Transmittance: ISO 22891:2013, without the use of a 420 nm cut-off filter.
Drainage resistance: SCAN M3:65
Strain at failure: ISO 1924-3:2005
Tensile energy abs. index: ISO 1924-3:2005
Tensile stiffness index ISO 1924-3:2005
Density (pulp sheet density, table 1): ISO 534:2005

### Example

In order to evaluate the high quality paperboard of the invention, a test series was performed in which a paperboard with a back ply comprising 100% of unbleached hardwood pulp was compared with a conventional paperboard comprising softwood pulp. Both paperboards in the test were of a three-ply construction, having top and back plies and a middle ply.

Strength, surface and optical properties of the paperboards were investigated. All tests were performed according to the methods and standards as indicated above and all analyses were carried out according to available standards after conditioning at 23°C, 50%RH.

### Paperboard Samples

Two three-ply paperboards were produced using an Automatic Dymanic Sheet Former (Formette Dynamique), each having top and back plies and a middle ply. The basis weight of the paperboards was approximately 185 gsm with the weight split: top-middle-back = 40-110-35 gsm.

The properties of the pulps used in the paperboard samples are shown in table 1.

**Table 1**

| | **UBHKP** | **BHKP** | **BSKP** | **CTMP** |
|---|---|---|---|---|
| Drainage resistance (°SR) | 34,8 | 30,1 | 30,7 | 37,1 |
| Density (kg/m3) | 713 | 737 | 748 | |
| Tensile index (Nm/g) | 92,7 | 72,0 | 78,0 | 18,9 |
| Strain at failure (%) | 3,87 | 4,07 | 4,00 | 1,12 |
| Tensile energy abs. index (J/g) | 2,43 | 2,03 | 2,11 | 0,15 |
| Tensile stiffness index (kNm/g) | 8,66 | 7,02 | 7,35 | 3,07 |

| | | | | |
|---|---|---|---|---|
| UBHK = Unbleached Hardwood Kraft Pulp of Eucalyptus SR° 35 BHKP = Bleached Hardwood Kraft Pulp of Eucalyptus SR° 31 BSKP = Bleached Softwood Kraft Pulp of spruce/pine SR° 30 CTMP = Chemi-thermomechanical hardwood pulp of Eucalyptus | | | | |

The compositions of the reference and the inventive paperboards can be seen in Table 2.

**Table 2**

| **Sample** | | **1 (ref)** | **2 (invention)** |
|---|---|---|---|
| Top Ply | BSKP[%] | 33 | 0 |
| | BHKP[%] | 67 | 100 |
| Middle Ply | CTMP[%] | 60 | 60 |
| | BSKP[%] | 25 | 0 |
| | BHKP[%] | 15 | 40 |
| | UBHK[%] | 0 | 0 |
| Back Ply | BSKP[%] | 33 | 0 |
| | BHKP[%] | 67 | 0 |
| | UBHK[%] | 0 | 100 |

Cationic starch were added to the furnishes forming the plies. Table 3 shows the content of starch in the different plies.

**Table 3**

| **Sample** | | **1(ref)** | **2** |
|---|---|---|---|
| Top Ply | Starch (kg/ton) | 4 | 4 |
| Middle Ply | Starch (kg/ton) | 7 | 7 |
| Back ply | Starch (kg/ton) | 4 | 4 |

Comparative tests were performed on the conventional paperboard, comprising softwood pulp (reference) and the paperboard of the invention, comprising a back-ply made of unbleached hardwood pulp to 100%, calculated on the total fiber content in said ply. The strength properties tested were tensile index, tear index, compression strength (SCT), internal bonding (Scott Bond), bending resistance (bending resistance index) and z-strength. The tests were performed before calendaring. The strength properties of the paperboards are summarized in table 4.

**Table 4**

| **Sample** | **Tensile index GM(Nm/g)** | **Tear index GM (mNm²/g)** | **SCT Index GM (Nm/g)** | **Scott Bond (J/m²)** | **Z-Strength (kPa)** | **Bending resist. Ind 50 mm 15°GM (Nm⁶/kg³)** | **Density (kg/m³)** |
|---|---|---|---|---|---|---|---|
| 1 (ref) | 77,4 | 10,6 | 30,7 | 341 | 588 | 18,2 | 653 |
| 2 | 76,8 | 8,1 | 29,8 | 281 | 548 | 20,0 | 639 |

The comparison shows that the tear strength and the scott bond value are somewhat lower for the inventive paperboard, but still well above acceptable levels.

The tensile strength and the Z-strength of the paperboard according to the invention is comparable to that of the reference. Also the short moment compression strength test (SCT) shows acceptable values for the inventive paperboard.

The bending resistance index value of the inventive paperboard is even higher than for the reference paperboard. A reason for this may be that the inventive paperboard has higher bulk than the reference paperboard.

Thus, these comparative tests show that the strength properties of paperboards made from 100% hardwood pulp and comprising a back-ply made from 100% unbleached hardwood pulp can be similar or even higher compared to conventional paperboards, partly comprising softwood pulp.

Furthermore, surface and optical properties of the paperboards were tested. These properties are summarized in table 5.

**Table 5**

| **Sample** | **Formation index Ambertec Normalized Stdev. (g^{1/2}/m)** | **Roughness Bendtsen 0,1 MPa print side (ml/min)** | **Air resistance Gurley L&W (s)** | **Transmittance C/2° wire side(%)** |
|---|---|---|---|---|
| 1 | 0,301 | 1435 | 100,9 | 7,0 |
| 2 | 0,296 | 891 | 58,1 | 2,9 |

As can be seen in table 5, the paperboards of the invention show improved formation. Moreover, the inventive paperboard shows a significantly smoother board surface (roughness) and a lower air resistance. An increased amount of hardwood fibres further gives rise to significantly improved optical barrier properties (lower transmittance).

## Claims

1. A multi-ply paperboard for packaging of liquid or food products, which paperboard comprises a top ply, a back ply and at least one middle ply arranged between said top and back ply, wherein said paperboard is made of 100% of hardwood pulp, calculated on the total fiber weight of said paperboard, wherein said top ply is made of hardwood chemical pulp and wherein said back ply is made of unbleached hardwood chemical pulp to 100%, calculated on the total fiber weight of said back ply and wherein said paperboard exhibits: a Scott Bond value of at least 100 J/m² and a bending resistance index of at least 5 Nm6/kg³.

2. A multi-ply paperboard according to claim 1, which paperboard has a basis weight of below 200 gsm, wherein the paperboard exhibits a Transmittance of below 5%.

3. A paperboard according to any one of claims 1 - 2, wherein at least one of the plies comprises dry strength additives, such as cationic starch and/or anionic carboxymethyl cellulose (CMC) and/or nanofibrillated polysaccharide.

4. A paperboard according to claim 3, wherein at least one of the plies comprises at least one anionic polymer and at least one cationic polymer, which polymers preferably have been added to the furnish forming the ply in consecutive steps.

## Patentansprüche

1. Mehrlagige Pappe zum Verpacken von Flüssig- oder Lebensmittelprodukten, wobei die Pappe eine obere Lage, eine hintere Lage und mindestens eine mittlere Lage, die zwischen der oberen und der hinteren Lage angeordnet ist, umfasst, wobei die Pappe zu 100 % aus Hartholzzellstoff, berechnet auf das Gesamtfasergewicht der Pappe, hergestellt ist, wobei die obere Lage aus chemischem Hartholzzellstoff hergestellt ist, und wobei die hintere Lage aus zu 100 % aus ungebleichtem chemischem Hartholzzellstoff, berechnet auf das Gesamtfasergewicht der hinteren Lage, hergestellt ist, und wobei die Pappe Folgendes aufweist: einen Scott-Bond-Wert von mindestens 100 J/m² und einen Biegewiderstandsindex von mindestens 5 Nm6/kg³.

2. Mehrlagige Pappe nach Anspruch 1, wobei die Pappe ein Flächengewicht von unter 200 g/m₂ aufweist, wobei die Pappe eine Durchlässigkeit von unter 5 % aufweist.

3. Pappe nach einem der Ansprüche 1-2, wobei mindestens eine der Lagen Trockenfestigkeitszusätze, wie kationische Stärke und/oder anionische Carboxymethylcellulose (CMC) und/oder nanofibrilliertes Polysaccharid, umfasst.

4. Pappe nach Anspruch 3, wobei mindestens eine der Lagen mindestens ein anionisches Polymer und mindestens ein kationisches Polymer umfasst, wobei die Polymere dem Stoffeintrag, der die Lage bildet, vorzugsweise in aufeinanderfolgenden Schritten zugesetzt wurden.

## Revendications

1. Carton multicouche d'emballage de produits liquides ou alimentaires, lequel carton comprend une couche supérieure, une couche arrière et au moins une couche intermédiaire agencée entre ladite couche supérieure et ladite couche arrière, ledit carton étant composé de 100 % de pâte de feuillus, calculé sur le poids total de fibres dudit carton, ladite couche supérieure étant composée de pâte chimique de feuillus et ladite couche arrière étant composée de pâte chimique de feuillus non blanchie à hauteur de 100 %, calculé sur le poids total de fibres de ladite couche arrière, ledit carton présentant : une valeur de cohésion de Scott d'au moins 100 J/m² et un indice de résistance à la flexion d'au moins 5 Nm6/kg³.

2. Carton multicouche selon la revendication 1, lequel carton a un grammage inférieur à 200 g/m², le carton présentant une transmittance inférieure à 5 %.

3. Carton selon l'une quelconque des revendications 1 et 2, dans lequel au moins une des couches comprend des additifs de résistance à sec, tels que de l'amidon cationique et/ou de la carboxyméthylcellulose anionique (CMC) et/ou un polysaccharide nanofibrillé.

4. Carton selon la revendication 3, dans lequel au moins une des couches comprend au moins un polymère anionique et au moins un polymère cationique, lesquels polymères ont de préférence été ajoutés à la composition de pâte à papier formant la couche dans des étapes consécutives.
